# FASCICULE DE BREVET EUROPEEN

(11) **EP 2 803 592 B1**
(45) Date de publication et mention de la délivrance du brevet: **13.07.2016**
(21) Numéro de dépôt: 14167901.9
(22) Date de dépôt: 12.05.2014
(51) Int. Cl.: B65B 37/06, B65B 37/16, B65B 3/32, B67C 3/20, G01F 11/02, G01F 13/00, B65B 57/14, B65B 59/00, B65B 3/12

(54) **Dispositif et procédé de dosage de produits et remplissage de récipients avec lesdits produits**
Vorrichtung und Verfahren zum Dosieren von Produkten, und Füllen von Behältern mit diesen Produkten
Device and method for metering products and filling containers with said products

(30) Priorité: 17.05.2013 FR 1354425
(43) Date de publication de la demande: 19.11.2014
(73) Titulaire: CIRMECA, 18510 Menetou Salon (FR)
(72) Inventeur: Boutard, Gérard, 18510 MENETOU SALON (FR)
(74) Mandataire: Debay, Yves

(56) Documents cités:
- WO-A1-91/06062
- WO-A2-00/54724
- DE-A1- 19 827 426
- FR-A5- 2 067 983

## Description

### DOMAINE TECHNIQUE DE L'INVENTION

La présente invention se rapporte au domaine des dispositifs et procédés de dosage de produits. Plus particulièrement, l'invention concerne un dispositif et un procédé de dosage de produits destinés à être stockés dans des récipients prévus à cet effet.

### ARRIERE-PLAN TECHNOLOGIQUE DE L'INVENTION

De façon connue en soi, les récipients destinés à recevoir un produit généralement sous forme de dose unique sont largement utilisés dans le milieu industriel ou les secteurs médicaux et paramédicaux. Par exemple Il est bien connu dans l'art antérieur des récipients présentés sous forme d'ampoule et comprenant un produit généralement sous forme liquide. Ces récipients, qui souvent contiennent une dose unique d'un produit, souvent à usage médical, paramédical, agroalimentaire ou cosmétique, font l'objet d'un remplissage précis du produit préalablement dosé.

Il est connu dans l'art antérieur des dispositifs destinés à remplir des récipients d'une dose déterminée d'un produit désiré. Ces dispositifs utilisent pour se faire la technique du vide. Le vide est fait dans les récipients à remplir, puis ces derniers sont trempés dans le produit, sous forme liquide, dont on veut remplir le récipient. Cependant, cette technique présente des désavantages, notamment la nécessité d'ajouter des opérations de lavage des récipients. De plus, il semble difficile d'utiliser cette technique pour remplir les récipients avec des liquides comprenant des solides en suspension : la répartition des solides dans les récipients ne serait pas équivalente d'un récipient à l'autre, posant ainsi des problèmes de reproductibilité du dosage et du remplissage.

Il est connu dans la demande de brevet FR 08 58114 un dispositif et un procédé de remplissage de flacons destinés à recevoir une dose déterminée d'un produit. Des flacons munis de bouchons sont disposés sur une plaque dans une enceinte étanche, à l'intérieur de laquelle un phénomène de pression/dépression est créé pour désolidariser les bouchons des flacons, lesdits bouchons étant maintenus par un tiroir déplaçable à l'intérieur de l'enceinte. Les flacons sont alors remplis du produit désiré avant d'être rebouchés. Cependant, les flacons sont remplis à l'aide de tubes plongeurs qui doivent être insérés puis retirés du flacon, ce qui risque de poser des problèmes de propreté de l'enceinte, par exemple causés par des gouttes de produit liquide glissant le long de la paroi des tubes plongeurs.

Les documents FR 2067983 A5 et WO 00/54724 A2 divulguent également des dispositifs et procédés de dosage et de remplissage de récipients. Le préambule de la revendication 1 est basé sur les caractéristiques des dispositifs divulgués dans ces documents.

### DESCRIPTION GENERALE DE L'INVENTION

La présente invention a donc pour objet de proposer un dispositif et un procédé de dosage de produits, liquides au moins en partie, et de remplissage de récipients avec lesdits produits, permettant de pallier un ou plusieurs des inconvénients de l'art antérieur.

L'invention propose un dispositif et un procédé de dosage de produits et de remplissage de récipients permettant d'une part de faciliter le nettoyage du dispositif quelque soit le produit utilisé, et d'autre part de faciliter la bonne répartition de tous les composants du produit dans les récipients à remplir.

A cet effet, l'invention concerne un dispositif de dosage de produit et de remplissage d'au moins un récipient destiné à recevoir un produit dosé, comprenant un circuit doté d'au moins un réservoir de stockage de produit, caractérisé en ce qu'il comporte :
- au moins un réservoir intermédiaire comportant au moins une sortie,
- au moins un système de dosage destiné à être relié d'une part à au moins une partie des sorties du réservoir intermédiaire, et d'autre part à au moins un tube de remplissage, chaque tube assurant le remplissage en produit d'un récipient prévu à cet effet, le système de dosage comprenant en outre au moins un piston, chacun destiné à être relié à une entrée du système de dosage et à un tube de remplissage, chaque piston étant destiné à recevoir et distribuer une dose déterminée de produit,

- des moyens d'approvisionnement du produit dans le circuit ainsi que des moyens de contrôle du flux de produit dans le circuit entre les réservoirs de stockage et intermédiaire, les moyens d'approvisionnement, le système de dosage et les tubes de remplissage, permettant le fonctionnement de l'installation selon soit :
   - un mode de remplissage des pistons du système de dosage, la partie mobile des pistons étant actionnée par des moyens de motorisation des pistons, la circulation de produit du système de dosage vers les tubes de remplissage étant empêchée par un moyen de contrôle du flux,
   - un mode de remplissage de récipients par vidage des pistons, la partie mobile des pistons étant actionnée par les moyens de motorisation, la circulation du produit du réservoir intermédiaire vers le système de dosage étant empêchée par un moyen de contrôle du flux,
le dispositif comprenant en outre des moyens de commande contrôlant les moyens de motorisation des pistons, les moyens d'approvisionnement du produit et les moyens de contrôle du flux de produit.

Selon l'invention, le dispositif de dosage et de remplissage est caractérisé en ce que le réservoir intermédiaire comprend au moins une sortie permettant la recirculation directe du produit dans le réservoir de stockage, la recirculation étant pilotée par des moyens de contrôle du flux piloté par les moyens de commande.

Selon l'invention, le dispositif de dosage et de remplissage est caractérisé en ce que dans le cadre du mode de remplissage de récipients, le produit circule également depuis le réservoir intermédiaire vers le réservoir de stockage, cette circulation étant pilotée par des moyens de contrôle du flux pilotés par les moyens de commande.

Selon une autre particularité, le dispositif de dosage et de remplissage est caractérisé en ce que dans le cadre d'un troisième mode de fonctionnement du dispositif, les moyens de commande pilotent les moyens de contrôle de flux correspondants de sorte que la recirculation du produit dans le réservoir de stockage soit possible sans que le produit ne circule dans le système de dosage.

Selon une autre particularité, le dispositif de dosage et de remplissage est caractérisé en ce que les moyens d'approvisionnement sont une pompe péristaltique, les raccords entre tous les éléments du circuit étant des tuyaux en plastique souple.

Selon une autre particularité, le dispositif de dosage et de remplissage est caractérisé en ce que l'énergie fournie aux moyens de motorisation des pistons et aux moyens d'approvisionnement provient d'un générateur électrique et/ou d'un accumulateur d'énergie pneumatique.

Selon une autre particularité, le dispositif de dosage et de remplissage est caractérisé en ce que les moyens de motorisation des pistons comprennent au moins un vérin pneumatique ou électrique.

Selon une autre particularité, le dispositif de dosage et de remplissage est caractérisé en ce que le système de dosage comprend des vis réglables destinées à faire buttée contre la partie mobile des pistons, de manière à contrôler le volume de remplissage de produit dans les pistons.

Selon une autre particularité, le dispositif de dosage et de remplissage est caractérisé en ce que les moyens de motorisation des pistons comprennent au moins un moteur sans balai associé à une came.

Selon une autre particularité, le dispositif de dosage et de remplissage est caractérisé en ce que les moyens de commande contrôlent le nombre de pas réalisés par le ou les moteurs sans balai, de manière à contrôler le volume de remplissage de produit dans les pistons.

Selon une autre particularité, le dispositif de dosage et de remplissage est caractérisé en ce que les moyens de contrôle du flux de produit dans le circuit sont des électrovannes pilotées par les moyens de commande.

Selon une autre particularité, le dispositif de dosage et de remplissage est caractérisé en ce que le réservoir intermédiaire comprend un pressostat piloté par les moyens de commande.

Un objectif supplémentaire de l'invention est de proposer un procédé de dosage de produit et de remplissage d'au moins un récipient destiné à recevoir un produit dosé, caractérisé en ce qu'il comprend :
a. une étape d'activation, par les moyens de commande, des moyens d'approvisionnement du produit, de sorte que le produit puisse circuler dans les éléments du circuit,
b. une étape d'ouverture, par les moyens de commande, du moyen de contrôle du flux de produit entre le réservoir intermédiaire et le système de dosage, et de fermeture, par les moyens de commande, du moyen de contrôle du flux de produit entre le système de dosage et les tubes de remplissage de produit,
c. une étape d'activation, par les moyens de commande, des moyens de motorisation des pistons du système de dosage de sorte que les pistons se remplissent chacun d'une dose déterminée de produit, suivi de la désactivation, par les moyens de commande, des moyens de motorisation une fois les pistons remplis de la dose déterminée de produit,
d. une étape de fermeture, par les moyens de commande, du moyen de contrôle du flux de produit entre le réservoir intermédiaire et le système de dosage, et d'ouverture, par les moyens de commande, du moyen de contrôle du flux de produit entre le système de dosage et les tubes de remplissage de produit,
e. une étape de remplissage de récipients positionnés en sortie des tubes de remplissage, la circulation du produit dans et hors des tubes de remplissage étant assurée par l'activation, par les moyens de commande, des moyens de motorisation des pistons assurant le vidage desdits pistons du système de dosage,
f. une répétition des étapes b à e tant qu'il y a du produit à distribuer et des récipients à remplir.

Selon l'invention, le procédé de dosage et de remplissage est caractérisé en ce que :
- durant l'étape b du procédé, les moyens de commande pilotent la fermeture du moyen de contrôle du flux de produit entre la sortie de recirculation du réservoir intermédiaire et le réservoir de stockage,
- durant l'étape d du procédé, les moyens de commande pilotent l'ouverture du moyen de contrôle du flux de produit entre la sortie de recirculation du réservoir intermédiaire et le réservoir de stockage,
de sorte que le produit soit toujours en mouvement dans le circuit, quelque soit le niveau d'avancement du procédé de dosage et de remplissage.

Selon une autre particularité, le procédé de dosage et de remplissage est caractérisé en ce qu'en l'absence de produit dans le réservoir de stockage, les moyens de commande désactivent au moins les moyens d'approvisionnement du produit.

Selon une autre particularité, le procédé de dosage et de remplissage est caractérisé en ce qu'en présence de produit dans le réservoir de stockage et en l'absence de récipients à remplir, les moyens de commande pilotent la fermeture de tous les moyens de contrôle du flux de produit à part celui situé entre la sortie de recirculation du réservoir intermédiaire et le réservoir de stockage, de sorte que le produit soit toujours en mouvement dans le circuit tant que les moyens d'approvisionnement du produit sont activés.

L'invention, avec ses caractéristiques et avantages, ressortira plus clairement à la lecture de la description faite en référence aux dessins annexés dans lesquels :
La figure 1 représente une vue en perspective du dispositif de dosage et de remplissage selon l'invention.
La figure 2 représente une vue de dessus du dispositif selon l'invention.
La figure 3 représente une vue en coupe du dispositif selon l'invention.
La figure 4 représente une vue arrière du dispositif selon l'invention.
La figure 5 présente le procédé de dosage et de remplissage selon l'invention.

### DESCRIPTION DES MODES DE REALISATION PREFERES DE L'INVENTION

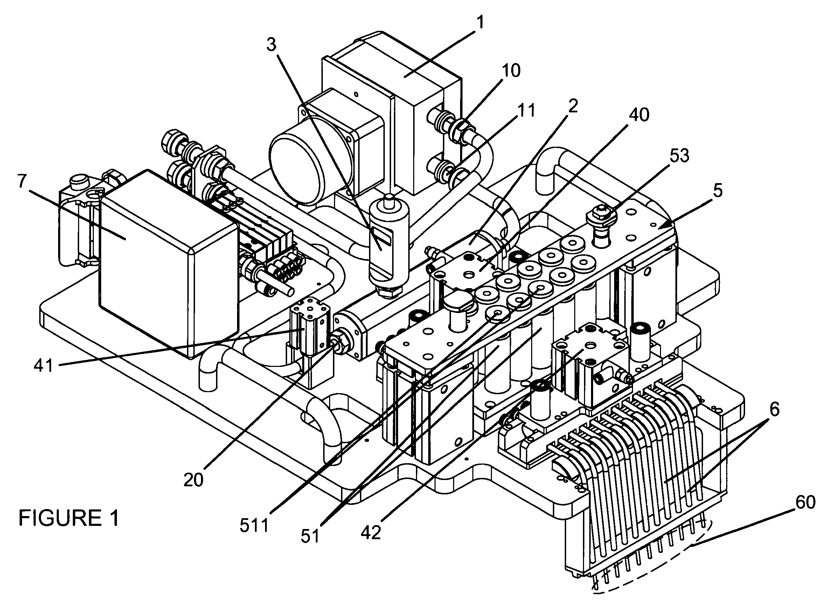

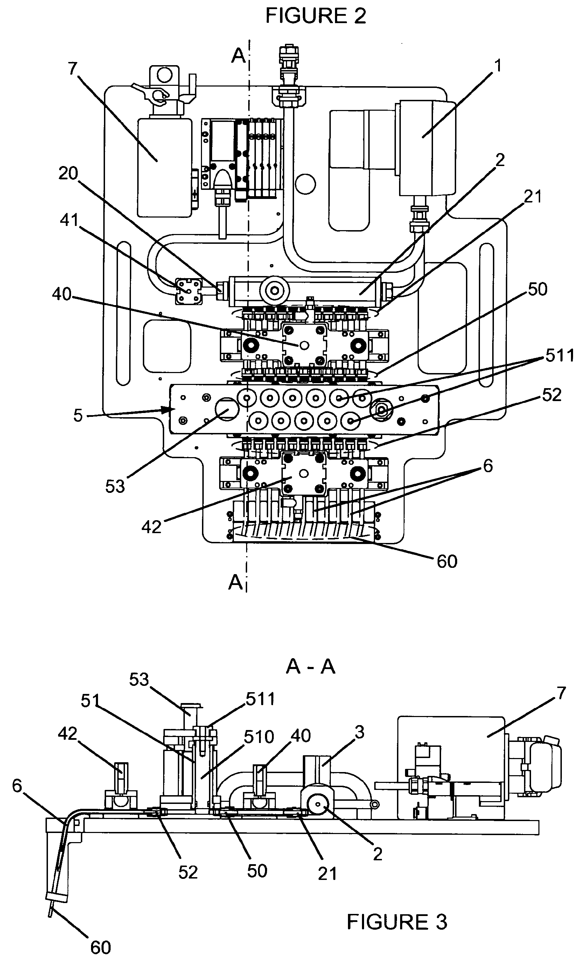

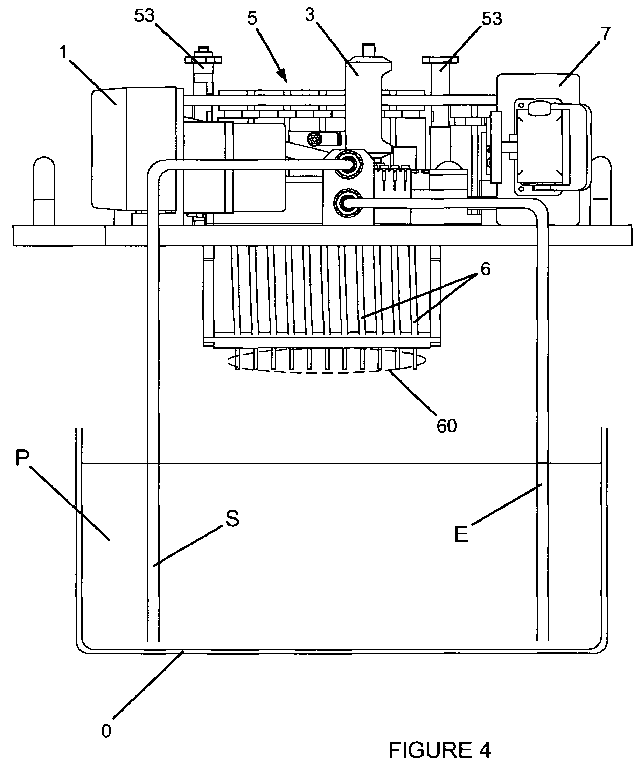

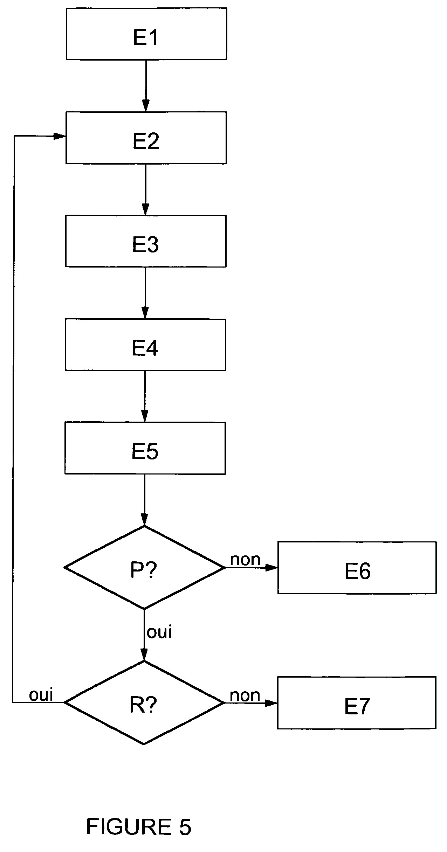

En référence aux figures 1 à 5, l'invention va maintenant être décrite.

Dans un mode de réalisation, le dispositif de dosage de produit (P) et de remplissage d'au moins un récipient destiné à recevoir un produit (P) dosé comprend au moins un circuit dans lequel circule le produit à doser, le circuit comprenant notamment un réservoir de stockage (0) de produit à doser. Par exemple et de manière non limitative, le produit est n'importe quel élément ou mélange sous forme liquide. Le produit sous forme liquide peut également comprendre, par exemple, des éléments solides en suspension, pourvu que ces éléments ne gênent pas la circulation du produit dans le circuit.

Dans un mode de réalisation, le circuit du dispositif de dosage de produit et de remplissage de récipients comprend des moyens d'approvisionnement (1) du produit dans le circuit. Par exemple et de manière non limitative, ces moyens d'approvisionnement (1) du produit (P) comprennent une pompe. Le produit circule entre les différents composants du circuit via des tuyaux, par exemple et de manière non limitative des tuyaux souples. Ainsi, il est possible d'intégrer avantageusement dans le circuit comprenant des tuyaux souples une pompe péristaltique (1), assurant ainsi l'approvisionnement en produit (P) dans le circuit. L'entrée (10) de la pompe (1) est destinée à être reliée au réservoir de stockage (0) via un tuyau d'entrée (E), tandis que la sortie (11) de la pompe est destinée à être reliée à l'entrée d'un réservoir intermédiaire (2), par exemple et de manière non limitative une nourrice, dispositif bien connu de l'homme du métier. Par soucis de commodité, le terme nourrice pour désigner le réservoir intermédiaire (2) sera utilisé dans la suite de la description.

Dans un mode de réalisation, la nourrice (2) comprend au moins une sortie (21) destinée à être reliées à au moins une d'entrée (50) d'un système de dosage (5) qui sera décrit plus loin dans le texte. Préférentiellement, la nourrice (2) comprend une pluralité de sorties (20, 21) dont au moins une partie (21) est destinée à être reliées à une pluralité d'entrées (50) du système de dosage (5). Dans un mode de réalisation préférentiel, la nourrice comprend au moins une sortie (20) dite sortie de recirculation, destinée à être directement reliée au réservoir de stockage (0) de produit via un tuyau de sortie (S), afin de permettre l'approvisionnement et la circulation en continu du produit dans une partie du circuit lorsque le système de dosage (5) n'est pas utilisé. Préférentiellement, la nourrice (2) comprend une sortie de recirculation (20) de produit.

Dans un mode de réalisation, le circuit comprend également des moyens de contrôle de la pression (3) du flux de produit (P) dans le circuit, par exemple un pressostat, par exemple et de manière non limitative intégré à la nourrice (2). Ce pressostat permet de vérifier que la pression de liquide dans le circuit reste dans une fourchette de valeurs assurant le bon fonctionnement du dispositif selon l'invention. Par exemple et de manière non limitative, si le pressostat (3) détecte une pression trop élevée dans le circuit, alors des moyens de commande intégrés dans le circuit stoppent la pompe (1) et l'approvisionnement du produit dans le circuit.

Dans un mode de réalisation, les moyens de commande sont destinés à contrôler et piloter tous les éléments du circuit, notamment les moyens d'approvisionnement (1) et les moyens de contrôle de la pression (3).

Dans un mode de réalisation, le système de dosage (5) va maintenant être décrit. Le système de dosage comprend au moins une entrée (50), préférentiellement une pluralité d'entrées, chacune reliée à une sortie (21) de la nourrice (2). Chaque entrée (50) du système de dosage (5) débouche dans un piston (51), le système de dosage comprenant autant de pistons que d'entrées. Dans un mode de réalisation, les pistons (51) sont tous identiques et de volume interne connu. Par exemple et de manière non limitative, les pistons sont métalliques, préférentiellement en acier inoxydable. La partie mobile (511) de chaque piston (51) est actionnée par des moyens de motorisation (53), lesdits moyens de motorisation étant eux-mêmes contrôlés par les moyens de commande du dispositif. Par exemple et de manière non limitative, ces moyens de motorisation (53) comprennent au moins un vérin électrique ou pneumatique. Selon une alternative de réalisation, ces moyens de motorisation comprennent au moins un moteur sans balai (*brushless* en anglais) associé à une came.

Dans un mode de réalisation, le dispositif selon l'invention comprend au moins une source d'énergie (7) assurant le fonctionnement des différents éléments du circuit. Ces sources d'énergie (7) peuvent comprendre au moins un générateur électrique et/ou un accumulateur d'énergie pneumatique.

Dans un mode de réalisation, le système de dosage (5) comprend au moins une sortie (52), préférentiellement une pluralité de sorties, chaque sortie d'une part débouchant sur une ligne de remplissage (6) et d'autre part communiquant avec un piston (51) du système de dosage (5). Chaque ligne (6) est destinée à recevoir une dose déterminée d'un produit (P), et comprend une extrémité (60) par laquelle le produit est distribué. Dans un mode de réalisation, un récipient destiné à recevoir le produit est placé en vis-à-vis de l'extrémité (60) de chaque ligne de remplissage (6). Le produit est donc d'abord dosé puis distribué dans des récipients prévus à cet effet, par le dispositif selon l'invention selon un procédé qui sera décrit plus loin dans le texte.

Dans un mode de réalisation, le circuit du dispositif selon l'invention comprend également des moyens de contrôle du flux (40, 41, 42) de produit (P) dans le circuit, contrôlés par les moyens de commande. Par exemple et de manière non limitative, ces moyens de contrôle du flux sont des électrovannes. Dans la suite de la description et par soucis de commodité, le terme électrovanne sera utilisé pour désigner les moyens de contrôle du flux (40, 41, 42) de produit dans le circuit. Chaque électrovanne (40, 41, 42) comprise dans le circuit, électrique ou pneumatique selon la source d'énergie disponible, fonctionne de la manière suivante : lorsque les moyens de commande pilotent une électrovanne de sorte que le flux soit stoppé au niveau de cette dernière, un élément de l'électrovanne est actionné pour faire pression sur le tuyau souple et in fine empêcher le passage du fluide dans le tuyau souple. A l'inverse, lorsque les moyens de commande pilotent une électrovanne de sorte que le flux de produit soit possible au niveau de cette dernière, ce même élément de l'électrovanne est actionné pour relâcher et/ou empêcher toute pression sur le tuyau souple et in fine permettre le passage du fluide dans le tuyau souple.

Dans un mode de réalisation, ces électrovannes (40, 41, 42) sont disposées dans le circuit entre le réservoir de stockage (0), la nourrice (2), les moyens d'approvisionnement (1) du produit, le système de dosage (5) et les lignes de remplissage (6). Par exemple et de manière non limitative, on dénombre trois de ces électrovannes dans le circuit : une électrovanne (41) entre la ou les sorties de recirculation du produit et le réservoir de stockage (0) pour contrôler le retour du produit vers le réservoir de stockage, une électrovanne (40) entre la pluralité de sorties de la nourrice menant vers le système de dosage et la pluralité d'entrée du système de dosage pour contrôler l'entrée de produit (P) dans le système de dosage, et une électrovanne (42) entre la pluralité de sorties du système de dosage et les lignes de remplissage, pour contrôler la distribution du produit.

Dans un mode de réalisation, les moyens de commande sont programmés, par exemple par un utilisateur, de manière à générer des modes de fonctionnement du dispositif assurant le dosage et la distribution du produit. Par exemple et de manière non limitative, on dénombre trois modes de fonctionnement du dispositif selon l'invention, chaque mode dépendant de l'état des électrovannes (40, 41, 42) commandées.

Le premier mode de fonctionnement est le mode de remplissage des pistons (51) en produit: les moyens de commande pilotent les moyens de motorisation (53) des pistons de sorte que ceux-ci actionnent la partie mobile des pistons afin que le produit soit aspiré dans le corps (510) des pistons. L'état des électrovannes (40, 41, 42) pilotées par les moyens de commande empêche la circulation du produit (P) depuis le système de dosage vers les lignes de remplissage.

Le deuxième mode de fonctionnement est le mode de remplissage des récipients : les moyens de commande pilotent les moyens de motorisation (53) des pistons (51) de sorte que ceux-ci actionnent la partie mobile des pistons afin que le produit soit vidé du corps (510) des pistons vers les lignes de remplissage (6). L'état des électrovannes pilotées par les moyens de commande permettent la circulation du produit depuis le système de dosage (5) vers les lignes de remplissage (6), et empêchent la circulation du produit de la nourrice (2) vers le système de dosage (5). De manière préférentielle, dans ce mode de fonctionnement, les moyens de commande pilotent les électrovannes de sorte que le produit (P) circule également depuis la nourrice (2) vers le réservoir de stockage (0) du produit. De la sorte, le produit est toujours en mouvement dans le circuit du dispositif selon l'invention, ce qui limite le dépôt de particules solides dans les tuyaux.

Le troisième mode de fonctionnement permet la circulation du produit en boucle fermée, dite recirculation, le produit empruntant seulement la partie du circuit partant du réservoir de stockage (0) vers la pompe (1), puis vers la nourrice (2) et enfin de nouveau vers le réservoir de stockage. Les électrovannes (40, 41 ,42) sont pilotées par les moyens de commande de sorte que cette recirculation soit rendue possible, tout en empêchant la circulation du produit vers le système de dosage (5) et les lignes de remplissage (6).

Ainsi quelque soit le mode de fonctionnement du dispositif selon l'invention, le produit (P) est toujours en mouvement dans le circuit.

Un objectif supplémentaire de l'invention est la combinaison astucieuse, réalisé par les moyens de commande, de ces différents modes de fonctionnement de manière à proposer un procédé de dosage de produit et de remplissage d'au moins un récipient prévu à cet effet. Un tel procédé selon l'invention va maintenant être décrit.

La première étape (E1) du procédé consiste en l'activation, par les moyens de commande, des moyens d'approvisionnement (1) du circuit: la pompe péristaltique activée, l'approvisionnement et la circulation du produit dans les différents éléments du circuit est rendue possible.

La deuxième étape (E2) du procédé est une étape d'une part d'ouverture par les moyens de commande de l'électrovanne (40) commandant la circulation du produit entre la nourrice (2) et le système de dosage (5), et d'autre part de fermeture par les moyens de commande de l'électrovanne (42) commandant la circulation du produit (P) entre le système de dosage et les lignes de remplissage. Dans un mode de réalisation, durant cette étape, les moyens de commande pilotent la fermeture de l'électrovanne (41) commandant la circulation du produit entre la ou les sorties de recirculation (20) de la nourrice et le réservoir de stockage (0) de produit.

La troisième étape (E3) du procédé est une étape d'activation par les moyens de commande des moyens de motorisation (53) des pistons, lesdits moyens de motorisation commandant le mouvement de la partie mobile de l'ensemble des pistons (51) de sorte que le produit soit aspiré dans le corps (510) desdits pistons. Dans un mode de réalisation, la pompe péristaltique (1) facilite le remplissage des pistons (51) grâce au débit de produit (P) qu'elle assure dans le circuit. Dans un mode de réalisation, la totalité du volume interne (510) des pistons est remplie de produit. Dans un mode de réalisation alternatif, les moyens de commande pilotent l'activation de la partie mobile des pistons (51) jusqu'à ce qu'un volume prédéterminé de produit soit aspiré dans les pistons. Cette valeur du volume prédéterminé est programmable par un utilisateur par le biais des moyens de commande. Par exemple et de manière non limitative, le système de dosage (5) comprend des vis réglables destinées à faire buttée contre la partie mobile (511) des pistons (51). La position de ces vis est décidée par l'utilisateur. L'utilisateur connaissant les dimensions de chaque piston et la hauteur de la course parcourue par la partie mobile (511) de chaque piston (51), le volume de remplissage en produit des pistons, et in fine le dosage de produit, est contrôlé et connu par l'utilisateur.

Dans une alternative de réalisation, lorsque les moyens de motorisation (53) des pistons (51) sont des moteurs sans balai, les moyens de commande contrôlent le nombre de pas effectués par chaque moteur sans balai. Chaque pas d'un moteur correspond à une hauteur connue de déplacement de la partie mobile (511) de chaque piston (51). L'utilisateur connaissant les dimensions de chaque piston (51) peut ainsi contrôler, via les moyens de commande, le nombre de pas de chaque moteur et donc le volume de remplissage en produit des pistons (51). In fine, le dosage de produit (P) est contrôlé et connu par l'utilisateur.

Une fois les pistons remplis de produit (P) ou du volume prédéterminé de produit, les moyens de commande désactivent les moyens de motorisation (53) des pistons.

La quatrième étape (E4) du procédé est une étape d'une part de fermeture par les moyens de commande de l'électrovanne (40) commandant la circulation du produit entre la nourrice (2) et le système de dosage (5), et d'autre part d'ouverture par les moyens de commande de l'électrovanne (42) commandant la circulation du produit (P) entre le système de dosage (5) et les lignes de remplissage (6). Dans un mode de réalisation, durant cette étape, les moyens de commande pilotent l'ouverture de l'électrovanne (41) commandant la circulation du produit entre la ou les sorties de recirculation (20) de la nourrice (2) et le réservoir de stockage (0) de produit.

La cinquième étape (E5) du procédé est une étape de remplissage d'au moins un récipient, les récipients vides étant positionnés en vis-à-vis de l'extrémité (60) des lignes de remplissage (6). Le remplissage des récipients est permis suite à l'activation par les moyens de commande des moyens de motorisation (53) des pistons (51), lesdits moyens de motorisation commandant le mouvement de la partie mobile de l'ensemble des pistons de sorte que le produit (P) soit expulsé desdits pistons. Une fois les pistons complètement vidés, les moyens de commande désactivent les moyens de motorisation des pistons.

Dans un mode de réalisation, le dispositif selon l'invention comprend une sonde, pilotée par les moyens de commande, permettant de détecter le niveau et/ou la présence (P?) de produit dans le réservoir de stockage (0). Ainsi, à la suite de la cinquième étape du procédé, si la sonde détecte que la quantité de produit dans le réservoir de stockage est nulle ou inférieure à une valeur prédéterminée, alors une étape optionnelle (E6) prévoit que les moyens de commande désactivent au moins les moyens d'approvisionnement (1) du produit dans le circuit.

Dans un mode de réalisation, si la quantité de produit (P) dans le réservoir est supérieure à une valeur prédéterminée, alors les moyens de commande vérifient que des récipients vides sont disponibles (R?). Si ce n'est pas le cas, une étape optionnelle (E7) prévoit que les moyens de commandent pilotent la fermeture de toutes les électrovannes (40, 42) hormis celle (41) située entre la ou les sorties de recirculation (20) de la nourrice (2) et le réservoir de stockage (0), de sorte que le produit soit toujours en mouvement dans le circuit. Si au contraire il y a encore des récipients à remplir, les étapes du procédé selon l'invention sont répétées tant qu'il y a des récipients à remplir et suffisamment de produit (P) dans le réservoir de stockage (0).

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine défini par la portée des revendications jointes, et l'invention ne doit pas être limitée aux détails donnés ci-dessus.

## Revendications

1. Dispositif de dosage de produit (P) et de remplissage d'au moins un récipient destiné à recevoir un produit dosé, comprenant un circuit doté d'au moins un réservoir de stockage (0) de produit, comportant :
- au moins un système de dosage (5) destiné à être relié d'une part à au moins une partie des sorties (21) du réservoir intermédiaire (2), et d'autre part à au moins un tube de remplissage (6), chaque tube assurant le remplissage en produit (P) d'un récipient prévu à cet effet, le système de dosage (5) comprenant en outre au moins un piston (51), chacun destiné à être relié à une entrée (50) du système de dosage (5) et à un tube de remplissage (6), chaque piston (51) étant destiné à recevoir et distribuer une dose déterminée de produit,
- des moyens d'approvisionnement (1) du produit (P) dans le circuit ainsi que des moyens de contrôle du flux (40, 41, 42) de produit dans le circuit entre les réservoirs de stockage (0) et intermédiaire (2), les moyens d'approvisionnement (1), le système de dosage (5) et les tubes de remplissage (6), permettant le fonctionnement de l'installation selon soit :
• un mode de remplissage des pistons (51) du système de dosage (5), la partie mobile (511) des pistons étant actionnée par des moyens de motorisation (53) des pistons, la circulation du produit (P) du système de dosage (5) vers les tubes de remplissage (6) étant empêchée par un moyen de contrôle du flux (42),
• un mode de remplissage de récipients par vidage des pistons (51), la partie mobile (511) des pistons étant actionnée par les moyens de motorisation (53), la circulation du produit du réservoir intermédiaire (2) vers le système de dosage (5) étant empêchée par un moyen de contrôle du flux (40),
le dispositif comprenant en outre des moyens de commande contrôlant les moyens de motorisation (53) des pistons (51), les moyens d'approvisionnement (1) du produit (P) et les moyens de contrôle du flux (40, 41, 42) de produit, le dispositif comprenant au moins un réservoir intermédiaire (2) comportant au moins une sortie (21) destinée à être reliée au système de dosage (5), le dispositif étant **caractérisé en ce que** le réservoir intermédiaire comprend au moins une deuxième sortie (20) permettant la recirculation directe du produit (P) dans le réservoir de stockage (0), la recirculation étant pilotée par des moyens de contrôle du flux (41) piloté par les moyens de commande, et
que dans le cadre du mode de remplissage de récipients, le produit (P) circule également depuis le réservoir intermédiaire (2) vers le réservoir de stockage (0), cette circulation étant pilotée par des moyens de contrôle du flux (41) pilotés par les moyens de commande.

2. Dispositif de dosage et de remplissage selon la revendication précédente, **caractérisé en ce que** dans le cadre d'un troisième mode de fonctionnement du dispositif, les moyens de commande pilotent les moyens de contrôle de flux correspondants (40, 41, 42) de sorte que la recirculation du produit (P) dans le réservoir de stockage (0) soit possible sans que le produit ne circule dans le système de dosage (5).

3. Dispositif de dosage et de remplissage selon l'une quelconque des revendications précédentes, **caractérisé en ce que** les moyens d'approvisionnement (1) sont une pompe péristaltique, les raccords entre tous les éléments du circuit étant des tuyaux en plastique souple.

4. Dispositif de dosage et de remplissage selon l'une quelconque des revendications précédentes, **caractérisé en ce que** l'énergie fournie aux moyens de motorisation (53) des pistons (51) et aux moyens d'approvisionnement (1) provient d'un générateur électrique et/ou d'un accumulateur d'énergie pneumatique (7).

5. Dispositif de dosage et de remplissage selon l'une quelconque des revendications précédentes, **caractérisé en ce que** les moyens de motorisation (53) des pistons (51) comprennent au moins un vérin pneumatique ou électrique.

6. Dispositif de dosage et de remplissage selon l'une quelconque des revendications précédentes, **caractérisé en ce que** le système de dosage (5) comprend des vis réglables destinées à faire buttée contre la partie mobile (511) des pistons (51), de manière à contrôler le volume de remplissage de produit dans les pistons (51).

7. Dispositif de dosage et de remplissage selon l'une quelconque des revendications 1 à 4, **caractérisé en ce que** les moyens de motorisation (53) des pistons (51) comprennent au moins un moteur sans balai associé à une came.

8. Dispositif de dosage et de remplissage selon l'une quelconque des revendications 1 à 4 et 7, **caractérisé en ce que** les moyens de commande contrôlent le nombre de pas réalisés par le ou les moteurs sans balai, de manière à contrôler le volume de remplissage de produit (P) dans les pistons (51).

9. Dispositif de dosage et de remplissage selon l'une quelconque des revendications précédentes, **caractérisé en ce que** les moyens de contrôle du flux (40, 41, 42) de produit (P) dans le circuit sont des électrovannes pilotées par les moyens de commande.

10. Dispositif de dosage et de remplissage selon l'une quelconque des revendications précédentes, **caractérisé en ce que** le réservoir intermédiaire (2) comprend un pressostat (3) piloté par les moyens de commande.

11. Procédé de dosage de produit (P) et de remplissage d'au moins un récipient destiné à recevoir un produit dosé, **caractérisé en ce qu'**il comprend :
a. une étape d'activation, par les moyens de commande, des moyens d'approvisionnement (1) du produit (P), de sorte que le produit puisse circuler dans les éléments du circuit,
b. une étape d'ouverture, par les moyens de commande, du moyen de contrôle du flux (40) de produit (P) entre le réservoir intermédiaire (2) et le système de dosage (5), et de fermeture, par les moyens de commande, du moyen de contrôle du flux (42) de produit entre le système de dosage (5) et les tubes de remplissage (6) de produit, les moyens de commande pilotant la fermeture du moyen de contrôle du flux (41) de produit (P) entre la sortie de recirculation (20) du réservoir intermédiaire (2) et le réservoir de stockage (0) de sorte que le produit soit toujours en mouvement dans le circuit,
c. une étape d'activation, par les moyens de commande, des moyens de motorisation (53) des pistons (51) du système de dosage (5) de sorte que les pistons (51) se remplissent chacun d'une dose déterminée de produit (P), suivi de la désactivation, par les moyens de commande, des moyens de motorisation (53) une fois les pistons (51) remplis de la dose déterminée de produit,
d. une étape de fermeture, par les moyens de commande, du moyen de contrôle du flux (40) de produit (P) entre le réservoir intermédiaire (2) et le système de dosage (5), et d'ouverture, par les moyens de commande, du moyen de contrôle du flux (42) de produit entre le système de dosage (5) et les tubes de remplissage (6) de produit, les moyens de commande pilotant l'ouverture du moyen de contrôle du flux (41) de produit (P) entre la sortie de recirculation (20) du réservoir intermédiaire (2) et le réservoir de stockage de sorte que le produit soit toujours en mouvement dans le circuit,
e. une étape de remplissage de récipients positionnés en sortie des tubes de remplissage, la circulation du produit (P) dans et hors des tubes de remplissage (6) étant assurée par l'activation, par les moyens de commande, des moyens de motorisation (53) des pistons (51) assurant le vidage desdits pistons du système de dosage (5),
f. une répétition des étapes b à e tant qu'il y a du produit à distribuer et des récipients à remplir.

12. Procédé de dosage et de remplissage selon la revendication 11, **caractérisé en ce qu'**en l'absence de produit (P) dans le réservoir de stockage (0), les moyens de commande désactivent au moins les moyens d'approvisionnement (1) du produit.

13. Procédé de dosage et de remplissage selon la revendication 11, **caractérisé en ce qu'**en présence de produit (P) dans le réservoir de stockage (0) et en l'absence de récipients à remplir, les moyens de commande pilotent la fermeture de tous les moyens de contrôle du flux (40, 42) de produit à part celui (41) situé entre la sortie de recirculation (20) du réservoir intermédiaire (2) et le réservoir de stockage, de sorte que le produit soit toujours en mouvement dans le circuit tant que les moyens d'approvisionnement (1) du produit sont activés.

## Patentansprüche

1. Vorrichtung zum Dosieren eines Produkts (P) und zum Befüllen zumindest eines Behältnisses, welches bestimmt ist, ein dosiertes Produkt aufzunehmen, umfassend einen Kreislauf, der ausgestattet ist mit mindestens einem Reservoir zum Speichern (0) des Produkts, umfassend:
- mindestens ein Dosierungssystem (5), welches bestimmt ist, einerseits zumindest mit einem Teil der Ausgänge (21) des mittleren Reservoirs (2) verbunden zu werden und andererseits mit zumindest einem Füllrohr (6), wobei jedes Rohr das Abfüllen als Produkt (P) eines Behältnisses, der dafür vorgesehen ist, sicherstellt, wobei das Dosierungssystem (5) darüber hinaus zumindest einen Kolben (51) umfasst, wobei jeder dazu bestimmt ist, mit einem Eingang (50) des Dosierungssystems (5) und einem Füllrohr (6) verbunden zu werden, wobei jeder Kolben (51) dazu bestimmt ist, eine vorbestimmte Produktdosis aufzunehmen und auszugeben,
- Mittel zum Beschaffen (1) des Produkts (P) in dem Kreislauf sowie Mittel zum Steuern des Produktstroms (40, 41, 42) in dem Kreislauf zwischen den Speicherungsreservoirs (0) und dem Mitteiteil (2), wobei die Beschaffungsmittel (1), das Dosierungssystem (5) und die Füllrohre (6) folgendermaßen die Funktionsweise der Einrichtung ermöglichen:
- einen Modus zum Befüllen der Kolben (51) des Dosierungssystems (5), wobei der bewegliche Teil (511) der Kolben durch Motorisierungsmittel (53) betrieben wird, wobei der Produktkreislauf (P) des Dosierungssystems (5) hin zu den Füllrohren (6) durch ein Mittel zum Steuern des Stroms (42) verhindert wird,
- einen Modus zum Befüllen von Behältnissen durch Entleerung der Kolben (51), wobei der bewegliche Teil (511) der Kolben durch die Motorisierungsmittel (53) betätigt wird, wobei der Produktkreislauf des mittleren Reservoirs (2) hin zu dem Dosierungssystem (5) durch ein Mittel zum Steuern des Stroms (4) verhindert wird, wobei die Vorrichtung darüber hinaus Steuerungsmittel umfasst, die die Motorisierungsmittel (53) der Kolben (51), die Mittel zum Beschaffen (1) des Produkts (1) und die Mittel zum Steuern des Produktstroms (40, 41, 42) steuern, wobei die Vorrichtung zumindest ein mittleres Reservoir (2) umfasst, welches zumindest einen Ausgang (21) umfasst, der dazu bestimmt ist, mit dem Dosierungssystem (5) verbunden zu sein, wobei die Vorrichtung **dadurch gekennzeichnet ist, dass** das mittlere Reservoir zumindest einen zweiten Ausgang (20) umfasst, der die direkte Rückführung des Produkts (P) in das Speicherungsreservoir (0) ermöglicht, wobei die Rückführung durch Mittel zum Steuern des Stroms (41) gesteuert durch die Steuerungsmittel gesteuert werden und dass im Rahmen des Modus zum Befüllen der Behältnisse sich das Produkt (P) gleichermaßen von dem mittleren Reservoir (2) bis zu dem Speicherungsreservoirs (0) bewegt, wobei diese Bewegung durch Mittel zum Steuern des Stroms (41) gesteuert durch Steuerungsmittel gesteuert werden.

2. Vorrichtung zum Dosieren und Befüllen nach dem vorhergehenden Anspruch,
**dadurch gekennzeichnet, dass** im Rahmen des dritten Modus zum Betrieben der Vorrichtung die Steuerungsmittel die entsprechenden Mittel zum Steuern des Stroms (40, 41, 42) steuern, so, dass die Rückführung des Produkts (P) in das Speicherreservoir (0) möglich ist, ohne dass sich das Produkt in dem Dosierungssystem (5) bewegt.

3. Vorrichtung zum Dosieren und Befüllen nach einem der vorhergehenden Ansprüche, **dadurch gekennzeichnet, dass** die Beschaffungsmittel (1) eine peristaltische Pumpe sind, wobei die Anschlüsse zwischen allen Elementen des Kreislaufes Leitungen aus flexiblem Plastik sind.

4. Vorrichtung zum Dosieren und Befüllen nach einem der vorhergehenden Ansprüche, **dadurch gekennzeichnet, dass** die Energie, die den Motorisierungsmitteln (53) der Kolben (51) und den Beschaffungsmitteln (1) geliefert werden, von einem elektrischen Generator stammt oder von einem Akkumulator mit pneumatischer Energie (7).

5. Vorrichtung zum Dosieren und Befüllen nach einem der vorhergehenden Ansprüche, **dadurch gekennzeichnet, dass** die Motorisierungsmittel (53) der Kolben (51) zumindest einen pneumatischen oder elektrischen Zylinder umfassen.

6. Vorrichtung zum Dosieren und Befüllen nach einem der vorhergehenden Ansprüche, **dadurch gekennzeichnet, dass** das Dosierungssystem (5) einstellbare Schrauben umfasst, die dazu bestimmt sind, an dem bewegbaren Teil (511) der Kolben (51) anzuliegen, so, dass das Füllvolumen des Produkts in den Kolben (51) kontrolliert wird.

7. Vorrichtung zum Dosieren und Befüllen nach einem der Ansprüche 1 - 4, **dadurch gekennzeichnet, dass** die Motorisierungsmittel (53) der Kolben (51) mindestens einen bürstenlosen Motor umfassen, der mit einer Kurvenscheibe verbunden ist.

8. Vorrichtung zum Dosieren und Befüllen nach einem der Ansprüche 1 - 4 und 7,
**dadurch gekennzeichnet, dass** die Steuerungsmittel die Anzahl von umgesetzten Schritten durch den oder die bürstenlosen Motoren kontrollieren, so, dass das Einfüllvolumen des Produkts (P) in die Kolben (51) kontrolliert wird.

9. Vorrichtung zum Dosieren und Befüllen nach einem der vorhergehenden Ansprüche, **dadurch gekennzeichnet, dass** die Mittel zum Steuern des Stroms (40, 41, 42) des Produkts (P) im Kreislauf Magnetventile sind, die durch die Steuerungsmittel gesteuert werden.

10. Vorrichtung zum Dosieren und Befüllen nach einem der vorhergehenden Ansprüche, **dadurch gekennzeichnet, dass** das mittlere Reservoir (2) einen Druckregler (3) umfasst, der durch die Steuerungsmittel gesteuert wird.

11. Verfahren zum Dosieren des Produkts (P) und zum Befüllen mit mindestens einem Behältnis, welches dazu bestimmt ist, ein dosiertes Produkt aufzunehmen, **dadurch gekennzeichnet, dass** es Folgendes umfasst:
a. einen Schritt des Aktivierens der Beschaffungsmittel (1) des Produkts (p) durch die Steuerungsmittel, so, dass sich das Produkt in den Elementen des Kreislaufes bewegen kann;
b. einen Schritt des Öffnens des Mittels zum Steuern des Produktstroms (P) (40) zwischen dem mittleren Reservoir (2) und dem Dosierungssystem (5) durch Steuerungsmittel und des Schließens des Mittels zum Kontrollieren des Produktstroms (42) zwischen dem Dosierungssystem (5) und den Leitungen zum Einfüllen (6) des Produkts durch die Steuerungsmittel, wobei die Steuerungsmittel das Schließen des Mittels zum Steuern des Produktstroms (P) (41) zwischen dem Ausgang der Rückführung (20) des mittleren Reservoirs (2) und dem Speicherungsreservoir (0) so steuern, dass das Produkt im Kreislauf immer in Bewegung ist,
c. einen Schritt des Aktivierens der Motorisierungsmittel (53) der Kolben (51) des Dosierungssystems (5) durch die Steuerungsmittel, so, dass sich jeder Kolben (51) mit einer vorbestimmten Produktdosis (P) füllt, gefolgt von der Deaktivierung der Motorisierungsmittel (53) durch die Steuerungsmittel, sobald die Kolben (51) mit der vorbestimmten Produktdosis befüllt sind,
d. einen Schritt des Schließens des Mittels zum Steuern des Produktstroms (P) (40) zwischen dem mittleren Reservoir (2) und dem Dosierungssystem (5) durch die Steuerungsmittel und des Öffnens des Mittels zum Steuern des Produktstroms (42) zwischen dem Dosierungssystem (5) und den Leitungen zum Befüllen (6) des Produkts durch die Steuerungsmittel, wobei die Steuerungsmittel das Öffnen des Mittels zum Steuern des Produktstroms (P) (41) zwischen dem Ausgang der Rückführung (20) des mittleren Reservoirs (2) und dem Reservoir zum Speichern steuern, so, dass das Produkt im Kreislauf ständig in Bewegung ist,
e. einen Schritt des Befüllens von Behältnissen, die am Ausgang der Füllleitungen angebracht sind, wobei der Produktkreislauf (P) in und außerhalb der Füllleitungen (6) durch Aktivierung der Motorisierungsmittel (53) der Kolben (51) durch die Steuerungsmittel erfolgt, wobei das Entleeren dieser Kolben des Dosierungssystems (5) sichergestellt wird,
f. ein Wiederholen der Schritte b bis e so, dass ein Produkt ausgegeben wird und die Behältnisse befüllt werden.

12. Verfahren zum Dosieren und Befüllen nach Anspruch 11, **dadurch gekennzeichnet, dass** bei Fehlen des Produkts (P) in dem Speicherreservoir (0) die Steuerungsmittel zumindest die Produktbeschaffungsmittel (1) deaktivieren.

13. Verfahren zum Dosieren und Befüllen nach Anspruch 11, **dadurch gekennzeichnet, dass** bei Vorhandensein des Produkts (P) in dem Speicherreservoir (0) und bei Nichtvorhandensein von zu befüllenden Behältnissen die Steuerungsmittel das Schließen aller Mittel zum Steuern des Produktstroms (40,42) steuern ausgenommen dessen (41) welches sich zwischen dem Ausgang der Rückführung (20) des mittleren Reservoirs (2) und dem Speicherungsreservoir befinden, so dass das Produkt in dem Kreislauf ständig in Bewegung ist, so dass die Produktbeschaffungsmittel (1) aktiviert sind.

## Claims

1. Device for dosing product (P) and filling at least one container designed to receive a dosed product, comprising a circuit equipped with at least one storage reservoir (0) for storing product, having:
- at least one dosing system (5) designed to be connected on one hand to at least one part of the outlets (21) of the intermediate reservoir (2), and on the other hand to at least one filling tube (6), each tube effecting the filling with product (P) of a container provided to that end, the dosing system (5) also comprising at least one piston (51), each designed to be connected to an inlet (50) of the dosing system (5) and to a filling tube (6), each piston (51) being designed to receive and distribute a predetermined dose of product,
- supplying means (1) for supplying the product (P) to the circuit and means for controlling the flow (40, 41, 42) of product in the circuit between the storage (0) and intermediate (2) reservoirs, the supplying means (1), the dosing system (5) and the filling tubes (6) allowing the operation of the installation in:
. a mode for filling the pistons (51) of the dosing system (5), the movable part (511) of the pistons being actuated by driving means (53) of the pistons, the circulation of the product (P) from the dosing system (5) to the filling tubes (6) being prevented by a flow control means (42),
. a mode for filling containers by emptying the pistons (51), the movable part (511) of the pistons being actuated by the driving means (53), the circulation of the product from the intermediate reservoir (2) to the dosing system (5) being prevented by a flow control means (40),
the device also comprising operating means controlling the driving means (53) of the pistons (51), the supplying means (1) for the product (P) and the flow control means (40, 41, 42) for product, the device comprising at least one intermediate reservoir (2) having at least one outlet (21) designed to be connected to the dosing system (5), the device being **characterised in that** the intermediate reservoir comprises at least one second outlet (20) allowing the direct recirculation of the product (P) into the storage reservoir (0), the recirculation being controlled by flow control means (41) controlled by the operating means, and **in that** in the context of the mode for filling containers, the product (P) also circulates from the intermediate reservoir (2) to the storage reservoir (0), this circulation being controlled by flow control means (41) controlled by the operating means.

2. Device for dosing and filling according to the preceding claim, **characterised in that** in the context of a third mode of operation of the device, the operating means control the corresponding flow control means (40, 41, 42) so that the recirculation of the product (P) into the storage reservoir (0) is possible without the product circulating in the dosing system (5).

3. Device for dosing and filling according to any one of the preceding claims, **characterised in that** the supplying means (1) are a peristaltic pump, the connections between all the elements of the circuit being flexible plastic hoses.

4. Device for dosing and filling according to any one of the preceding claims, **characterised in that** the energy supplied to the driving means (53) of the pistons (51) and to the supplying means (1) comes from an electrical generator and/or from a pneumatic energy accumulator (7).

5. Device for dosing and filling according to any one of the preceding claims, **characterised in that** the driving means (53) of the pistons (51) comprise at least one pneumatic or electric actuator.

6. Device for dosing and filling according to any one of the preceding claims, **characterised in that** the dosing system (5) comprises adjustable screws designed to butt against the movable part (511) of the pistons (51) so as to control the volume of filling of product in the pistons (51).

7. Device for dosing and filling according to any one of claims 1 to 4, **characterised in that** the driving means (53) of the pistons (51) comprise at least one brushless motor associated with a cam.

8. Device for dosing and filling according to any one of claims 1 to 4 and 7, **characterised in that** the operating means control the number of steps performed by the brushless motor or motors, so as to control the volume of filling of product (P) in the pistons (51).

9. Device for dosing and filling according to any one of the preceding claims, **characterised in that** the flow control means (40, 41, 42) for product (P) in the circuit are electromagnetic valves controlled by the operating means.

10. Device for dosing and filling according to any one of the preceding claims, **characterised in that** the intermediate reservoir (2) comprises a pressure switch (3) controlled by the operating means.

11. Method for dosing product (P) and filling at least one container designed to receive a dosed product, **characterised in that** it comprises:
a. a step for activation, by the operating means, of the supplying means (1) for the product (P) so that the product is able to circulate in the elements of the circuit,
b. a step for opening, by the operating means, of the flow control means (40) for product (P) between the intermediate reservoir (2) and the dosing system (5), and for closure, by the operating means, of the flow control means (42) for product between the dosing system (5) and the filling tubes (6) for product, the operating means controlling the closure of the flow control means (41) for product (P) between the recirculation outlet (20) of the intermediate reservoir (2) and the storage reservoir (0) so that the product is always moving in the circuit,
c. a step for activation, by the operating means, of the driving means (53) of the pistons (51) of the dosing system (5) so that the pistons (51) are each filled with a predetermined dose of product (P), followed by the deactivation, by the operating means, of the driving means (53) once the pistons (51) are filled with the predetermined dose of product,
d. a step for closure, by the operating means, of the flow control means (40) for product (P) between the intermediate reservoir (2) and the dosing system (5), and opening, by the operating means, of the flow control means (42) for product between the dosing system (5) and the filling tubes (6) for product, the operating means controlling the opening of the flow control means (41) for product (P) between the recirculation outlet (20) of the intermediate reservoir (2) and the storage reservoir (0) so that the product is always moving in the circuit,
e. a step for filling containers positioned at the outlet of the filling tubes, the circulation of the product (P) in and out of the filling tubes (6) being assured by the activation, by the operating means, of the driving means (53) of the pistons (51) assuring the emptying of said pistons of the dosing system (5),
f. a repetition of steps b to e as long as there is product to be distributed and containers to fill.

12. Method for dosing and filling according to claim 11, **characterised in that** in the absence of product (P) in the storage reservoir (0), the operating means deactivate at least the supplying means (1) for the product.

13. Method for dosing and filling according to claim 11, **characterised in that** in the presence of product (P) in the storage reservoir (0) and in the absence of containers to fill, the operating means control the closure of all the flow control means (40, 42) for product except for the flow control means (41) located between the recirculation outlet (20) of the intermediate reservoir (2) and the storage reservoir so that the product is always moving in the circuit as long as the supplying means (1) for the product are activated.
